# FASCICULE DE BREVET EUROPEEN

(11) **EP 0 780 775 B1**
(45) Date de publication et mention de la délivrance du brevet: **08.03.2000**
(21) Numéro de dépôt: 96402760.1
(22) Date de dépôt: 17.12.1996
(51) Int. Cl.: G06F 15/80, G06F 15/173

(54) **Architecture d'un système de tableaux de processeurs à structures parallèles multiples**
Architektur eines Systems von Arrayprozessoren mit parallelen Mehrfachstrukturen
Architecture of a system of array processors with multiple parallel structures

(30) Priorité: 19.12.1995 FR 9515049
(43) Date de publication de la demande: 25.06.1997
(73) Titulaire: COMMISSARIAT A L'ENERGIE ATOMIQUE, 75015 Paris Cédex 15 (FR)
(72) Inventeur: Essafi, Hassane, 91400 Orsay (FR); D'Humieres, Dominique, 75005 Paris (FR); Pic, Marc, 84360 Lauris (FR)
(74) Mandataire: Dubois-Chabert, Guy

(56) Documents cités:
- EP-A- 0 646 875
- WO-A-93/03441
- US-A- 4 942 517
- IEEE ANTENNAS AND PROPAGATION SOCIETY INTERNATIONAL SYMPOSIUM 1994. IEEE. 1994 INTERNATIONAL SYMPOSIUM DIGEST ANTENNAS AND PROPAGATION (CAT. NO.94CH3466-0), PROCEEDINGS OF IEEE ANTENNAS AND PROPAGATION SOCIETY INTERNATIONAL SYMPOSIUM AND URSI NATIONA, ISBN 0-7803-2009-3, 1994, NEW YORK, NY, USA, IEEE, USA, pages 372-375 vol.1, XP002012779 SIMONS N R S ET AL: "Cellular automata as a new computational approach to modelling electromagnetic phenomena"

## Description

### Domaine technique

L'invention concerne une architecture de système en tableau de processeurs à structures parallèles multiples adaptée, en particulier, à la simulation numérique d'écoulements fluides.

L'invention trouve des applications dans le domaine du traitement de données, notamment pour des données relatives aux écoulements de fluides (eau, air, gaz, métaux fondus...). Elle peut être appliquée, par exemple, à la géologie pour l'étude du comportement des milieux poreux, à la résistance des matériaux pour l'étude de la résistance de pièces aux écoulements fluides, en aérodynamique pour les problèmes de réentrance atmosphérique, en chimie pour l'étude de phénomènes catalytiques, ou encore en métallurgie, pour l'étude et la conception de moyens de filtrage de métaux liquéfiés, etc.

### Etat de la technique

Dans le domaine du traitement de données, il est souvent nécessaire de traiter des structures de données inhomogènes, c'est-à-dire des structures de données qui ont globalement des comportements identiques, mais dont les comportements locaux peuvent différer.

Ceci est le cas, en particulier, pour les données relatives aux écoulements de fluides qui, généralement, ont des comportements macroscopiques identiques, mais dépendants des comportements microscopiques des constituants du fluide.

Pour étudier le comportement macroscopique des fluides, il est connu d'effectuer une modélisation de ces fluides. Cela est réalisé en discrétisant l'espace physique en un réseau à deux ou trois dimensions de pas unité, dans lequel chaque molécule constitutive du fluide est modélisée par un point se déplaçant sur une grille de positions discrètes, à savoir le réseau. Chaque site du réseau, c'est-à-dire chaque point de la grille, correspond à la valeur locale de plusieurs champs représentant des grandeurs physiques, telles que la densité de particules, le flux, etc.

Pour une telle modélisation, le temps également est discrétisé. Aussi, à chaque pas de temps, chaque site évolue en suivant une loi simulant le comportement physique de l'écoulement considéré en employant les valeurs prises par les champs dans son voisinage.

Cette évolution des sites peut être conduite de plusieurs manières. Classiquement, cette évolution se fait au moyen de lois s'exprimant sous la forme d'équations aux dérivées partielles, telles que les équations de NAVIER-STOCKES, au moyen d'une méthode d'éléments finis, ou de différences finies.

Cette évolution peut également être conduite par des méthodes dites de "gaz-sur-réseau" qui consistent à simuler le comportement macroscopique du fluide au moyen d'un espace mésoscopique muni de lois d'évolution de type "automate", déterminées de façon à correspondre à des équations aux dérivées partielles, telles que les équations de NAVIER-STOCKES. Cette méthode de gaz-sur-réseau permet ainsi de modéliser à l'échelle microscopique, le comportement d'un fluide en recherchant la similitude entre le comportement macroscopique de ce gaz et celui d'un fluide réel.

Ces méthodes gaz-sur-réseau ont l'avantage, par rapport aux méthodes classiques, de permettre des applications beaucoup plus variées du fait de la grande capacité d'adaptabilité des règles utilisées dans ces méthodes pour modéliser des systèmes physiques divers.

Dans ces méthodes de gaz-sur-réseau, la propagation sur les liens du réseau se fait à la vitesse d'un pas du réseau par unité de temps. Cette propagation est synchronisée, ce qui veut dire qu'à chaque pas de temps, l'ensemble des particules animées d'une vitesse non nulle se déplace simultanément. Cette phase de propagation est suivie par une phase de collisions sur chaque site, c'est-à-dire sur chaque point de la grille, ou réseau. Les règles de collisions consistent, pour cette méthode, à associer à chaque configuration possible représentant un état d'entrée des particules sur le site, une autre configuration qui représentera l'état de sortie produit par la collision des particules sur ce site.

Cette simulation du comportement du fluide est régie par des règles de collisions qui diffèrent en fonction du modèle choisi.

Dans les méthodes de gaz-sur-réseau, on peut utiliser, par exemple, des modèles booléens ; dans ce cas, les règles de collisions utilisées travaillent uniquement sur des variables binaires et se présentent sous la forme de tables de collisions qui représentent l'ensemble des cas possibles. Ces tables de collisions résument ainsi la fonction d'évolution du système, cette fonction tenant compte des quantités conservées dans le système étudié, telles que la masse et la quantité de mouvement.

Une telle méthode de gaz-sur-réseau de type booléen est mise en oeuvre, généralement par des architectures de systèmes de processeurs à structure parallèle qui effectuent un traitement simultané sur un large nombre de sites. Il est connu, notamment, d'implanter des cartes accélératrices sur des stations de travail, telles que les machines CAM décrites par T. TOFFOLI et M. MARGOLUS dans "Cellular Automatamachines", MIT Press, Cambridge, Massachussetts, 1987, ou les machines R. A. P. décrites notamment par A. CLOUQUEUR et D. D'HUMIERES, "R. A. P., a family of cellular automaton machines for fluid dynamics", dans Proceedings of the 12th Gwatt workshop on complex systems, Gwatt, Suisse, Octobre 1988.

Cette méthode de gaz-sur-réseau à modèles booléens est simple à mettre en oeuvre du fait de l'utilisation des tables de collisions. Pour cette raison, elle est rapide et peut s'adapter à des problèmes de natures différentes. De plus, les opérations effectuées se font sans perte d'informations, ce qui rend cette méthode numériquement stable. Par contre, cette méthode présente un inconvénient majeur en ce qui concerne la présence d'un bruit numérique que l'on peut trouver sur les résultats obtenus en fin de traitement, ce bruit numérique pouvant gêner l'extraction des résultats.

La méthode de gaz-sur-réseau peut également utiliser des modèles dits de BOLTZMANN ; la règle de collisions consiste, dans ce cas, en une résolution locale d'une équation d'état. Contrairement aux règles de collisions des modèles booléens, cette règle de collisions basée sur les modèles de BOLTZMANN emploie des variables à valeurs réelles qui représentent des distributions de particules. Ceci nécessite donc d'effectuer des calculs flottants dont la mise en oeuvre est lourde et onéreuse. Cette méthode nécessite également la résolution d'équations aux dérivées partielles qui est également lourde à mettre en oeuvre. Par ailleurs, cette méthode permet une bonne précision des calculs, due à l'aspect quasi-continu des distributions de particules qui composent ce modèle, ce qui assure un bruit numérique réduit. Toutefois, ces calculs sont peu stables.

### Exposé de l'invention

La présente invention a justement pour but de remédier à ces inconvénients. A cette fin, elle propose une architecture de système de processeurs élémentaires en tableau, permettant de mettre en oeuvre une méthode de gaz-sur-réseau à modèles booléens, dont les résultats ne sont pas entachés de bruit numérique.

Cette architecture permet donc de traiter des données relatives à la simulation numérique d'écoulements fluides. Elle permet aussi, de façon plus générale, de traiter différents types de données inhomogènes.

De façon plus précise, l'invention concerne un système de processeurs élémentaires en tableau, organisés selon une pluralité de noeuds à fonctionnement SIMD comportant chacun une pluralité de processeurs élémentaires reliés les uns aux autres de façon à former un anneau de processeurs élémentaires, chaque processeur élémentaire étant associé, d'une part, à une mémoire et, d'autre part, à un module d'interconnexion, celui-ci comportant :
- une cellule de connexion connectée aux cellules des processeurs élémentaires voisins pour former un réseau en anneau dans lequel circulent des jetons de priorité ;
- un module de réception de messages, connecté entre la cellule de connexion et le processeur élémentaire ; et
- un module d'émission de messages, connecté entre le processeur élémentaire et la cellule de connexion.

Ce système de processeurs élémentaires en tableau se caractérise en ce que chaque processeur élémentaire de chaque noeud est muni d'un module de gestion de sa mémoire locale assurant l'indépendance d'adressage de celle-ci vis-à-vis des autres processeurs élémentaires et en ce que chaque noeud SIMD est muni d'une unité de contrôle reliée aux unités de contrôle des noeuds voisins pour former un réseau de contrôle inter-noeuds dans lequel circulent des jetons de priorité.

Avantageusement, chaque noeud SIMD est muni d'un module de mémoire et d'adressage qui assure une indépendance d'adressage du noeud, chaque module de mémoire et d'adressage d'un noeud SIMD étant relié au module de mémoire et d'adressage des noeuds SIMD voisins, de façon à former un réseau de données inter-noeuds.

Dans son application à la simulation numérique d'écoulements de fluides, le système de processeurs élémentaires en tableau comporte des moyens de décomposition pour décomposer une collision de particules de fluide multiple en une pluralité de collisions booléennes élémentaires aptes à être traitées à partir des noeuds SIMD.

Avantageusement, ces moyens de décomposition comportent des moyens d'extraction de maximum/minimum, des moyens de tirage pseudo-aléatoire, ainsi que des moyens d'automatisation de la décomposition en collisions élémentaires.

Selon cette application à la simulation numérique d'écoulements de fluides, chaque processeur élémentaire peut comporter, en outre, des moyens de recomposition pour reconstruire, à partir des collisions élémentaires traitées, une collision résultante.

### Brève description des dessins

- La figure 1 représente schématiquement l'architecture du système de processeurs élémentaires en tableau de l'invention ;
- la figure 2 montre des exemples de collisions simples entre particules, ainsi que le résultat de ces collisions ;
- la figure 3 représente un schéma fonctionnel montrant les différentes interventions des moyens de décomposition d'un processeur élémentaire sur un exemple de décomposition d'une collision multiple.

### Exposé détaillé de modes de réalisation

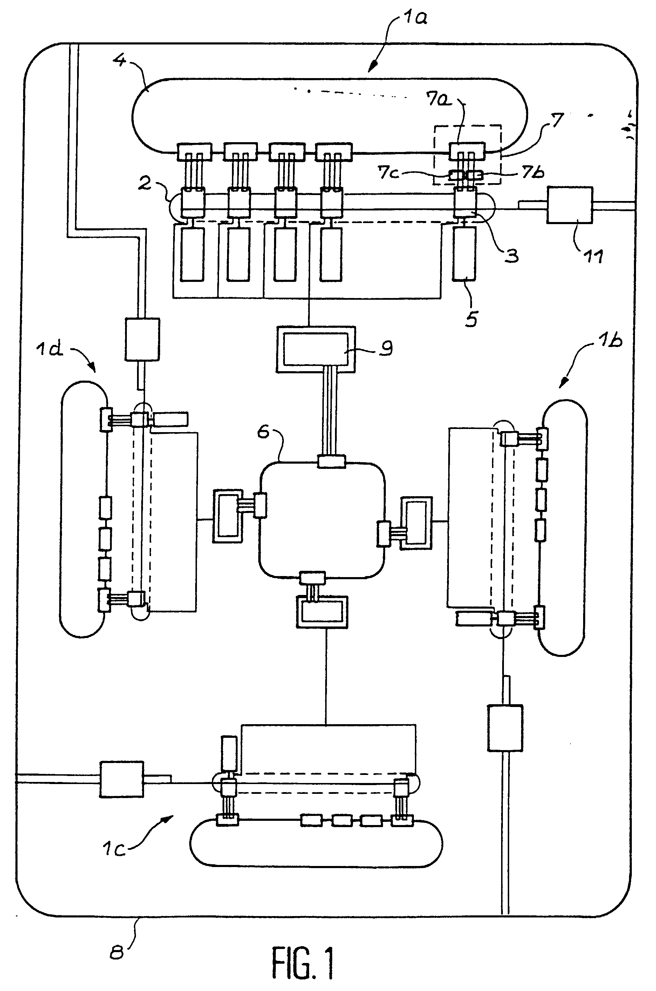

L'invention concerne une architecture de système en tableau de processeurs élémentaires à structures parallèles multiples. Cette architecture est représentée schématiquement sur la figure 1.

Comme on le voit sur cette figure 1, le système de l'invention est constitué d'une pluralité de noeuds 1 à fonctionnement SMID (Single Instruction Stream Multiple Data Stream).

Dans l'exemple de la figure 1, le système est constitué de quatre noeuds SIMD 1a, 1b, 1c, 1d. Tous ces noeuds sont strictement identiques. En conséquence, un seul de ces noeuds sera décrit, par mesure de simplification de la description. Le noeud qui sera décrit sera le noeud référencé 1a.

Ce noeud 1a comporte une pluralité de processeurs élémentaires 3 qui sont reliés les uns aux autres de façon à former un premier anneau 2, appelé "anneau de processeurs élémentaires". Chaque processeur élémentaire 3 est muni d'un module de gestion de la mémoire locale LMM (Local Memory Manager) assurant l'indépendance d'adressage de celle-ci vis-à-vis des autres processeurs élémentaires. Autrement dit, cette mémoire LMM est un dispositif qui met en oeuvre les principes d'organisation de la mémoire (organisation hélicoïdale) décrits dans le brevet FR-A-2 623 310 (pages 7, ligne 10, à page 10, ligne 35). Chaque processeur élémentaire 3 de ce noeud SIMD la est associé, d'une part, à une mémoire 5 qui lui est propre et, d'autre part, à un module d'interconnexion 7. Ce module d'interconnexion comporte une cellule de connexion 7a qui est connectée aux cellules de connexion des processeurs élémentaires voisins, de façon à former un second anneau 4, appelé "réseau en anneau", dans lequel circulent des jetons de priorité.

Ainsi, lorsqu'un jeton est présent, la cellule de connexion 7a assure la réception de la première donnée du message qui circule dans le réseau 4 et qui est destinée au processeur élémentaire 3 auquel la cellule de connexion 7a est associée ; la cellule de connexion 7a assure, d'autre part, l'émission du message que le processeur élémentaire 3 veut envoyer sur le réseau 4.

Ce module d'interconnexion comporte aussi un module de réception de messages 7b qui est connecté entre la cellule de connexion 7a et le processeur élémentaire 3 et qui assure la mémorisation des messages entiers reçus par la cellule de connexion 7a et destinés au processeur élémentaire 3 auquel ce module de réception 7b est associé.

Le module d'interconnexion comporte, de plus, un module d'émission 7c qui est connecté entre le processeur élémentaire 3 et la cellule de connexion 7a et qui assure la mémorisation des messages entiers que le processeur élémentaire 3 veut envoyer sur le réseau 4.

Cette partie du système de processeurs SIMD ne sera pas décrite de façon plus détaillée, car elle est déjà connue de l'homme de l'art. En effet, un tel système de processeurs élémentaires à structure parallèle, est décrit dans les demandes de brevets français FR-A-2 680 026 et FR-A-2 623 310 qui décrivent une architecture de système en tableau de processeurs dans laquelle les processeurs sont connectés entre eux pour former un anneau. En outre, le brevet français FR-A-2 710 993 décrit, quant à lui, le module d'interconnexion associé à chaque processeur de l'anneau ; il décrit également le procédé de gestion des messages circulant dans le réseau de processeurs à structure parallèle du type de celui décrit dans les deux documents précédents.

Le noeud SIMD la comporte, en outre, une unité de contrôle (UC) 9 qui est connectée aux unités de contrôle des noeuds SIMD 1b, 1d voisins. Ainsi reliées entre elles, les unités de contrôle 9 de chacun des noeuds du système forment un troisième anneau 6, appelé "réseau de contrôle inter-noeuds".

Le noeud SIMD la comporte, en outre, un module d'adressage et de mémoire 11, qui assure au noeud une indépendance d'adressage. De plus, ce module de mémoire et d'adressage 11 est relié au module de mémoire et d'adressage des noeuds voisins 1b, 1d, de façon à former un quatrième anneau 8, appelé "réseau de données inter-noeuds".

Ainsi, l'ensemble des noeuds SIMD 1a - 1d de la structure sont reliés ensemble de deux façons différentes, et forment ainsi deux réseaux de communication 6 et 8 qui agissent à des niveaux de traitement différents.

En effet, le réseau de contrôle inter-noeuds 6, c'est-à-dire l'anneau reliant les unités de contrôle entre elles, assure le transfert des informations de contrôle de l'exécution et de la synchronisation des tâches exécutées par chacun des noeuds 1a-1d.

Par ailleurs, le réseau de données inter-noeuds 8, c'est-à-dire le réseau qui relie chaque groupe de processeurs élémentaires entre eux, assure le transfert de blocs de données massifs, non pas point à point, comme les autres réseaux 2, 4 et 6, mais de manière globale, à savoir de noeud à noeud.

Ainsi, chaque noeud agit indépendamment du noeud voisin en suivant un programme qui est chargé dans son unité de contrôle, tandis qu'au sein de chacun de ces noeuds, les processeurs élémentaires reliés par l'anneau 2 agissent simultanément en exécutant un programme identique, dirigé par l'unité centrale qui leur est associée.

En d'autres termes, le fait que les unités de contrôle soient reliées sous forme d'un réseau 6 permet de traiter des structures de données inhomogènes, puisque à l'intérieur de chaque noeud SIMD, les processeurs élémentaires travaillent en parallélisme les uns avec les autres, mais que chaque noeud peut travailler indépendamment des autres noeuds.

Il est à noter, en outre, que la gestion du réseau de contrôle inter-noeuds 6 est identique à celle du second anneau 4. Cette gestion se fait donc au moyen d'un jeton de priorité qui circule dans le réseau, comme cela est expliqué dans le document FR-A-2 710 993.

Le réseau de données inter-noeuds 8 a un rôle totalement différent du réseau de contrôle inter-noeuds 6. En effet, ce réseau de données inter-noeuds 8 permet de traiter les données relatives aux frontières entre deux zones de données à traiter par les noeuds SIMD. Ces zones qui posent problème sont en général les contours d'objets solides, les zones d'injections particulières ou encore les phases dans des milieux multiphasiques, etc.

Avec les architectures parallèles SIMD classiques, lors du traitement de deux zones de l'espace de simulation dont le comportement est différent, les processeurs traitant l'une de ces deux zones doivent être inhibés en attendant que ceux qui traitent l'autre zone aient achevé leur traitement. Les rôles sont ensuite inversés. Ce traitement des frontières entre deux zones, appelé aussi "traitement des bords", est résolu par le fait que ce réseau 8 transfère des blocs de données massifs d'un noeud vers un autre noeud, ce qui assure une simplification du traitement à l'intérieur de chaque noeud. Ce problème des frontières est résolu dans l'invention en prenant le rapport du nombre de noeuds sur le nombre de processeurs élémentaires total et en conservant ce rapport le plus petit possible pour réduire la circuiterie et, par conséquent, le coût de l'architecture.

Ce traitement des frontières permet ainsi d'améliorer la vitesse de fonctionnement de l'ensemble du système et de limiter le coût du système.

A titre indicatif, on peut préciser que l'architecture de l'invention peut comporter deux à environ trente-deux noeuds, selon le traitement à effectuer, à savoir, qu'un traitement répétitif nécessite un petit nombre de noeuds, tandis qu'un problème plus complexe (tel que les problèmes de réentrance atmosphérique) nécessitent un grand nombre de noeuds. Par ailleurs, chaque noeud comporte un nombre de processeurs qui peut varier en fonction du traitement à effectuer ; typiquement, un noeud comporte trente-deux à mille vingt-quatre processeurs élémentaires.

Ce système de processeurs à structures parallèles multiples peut donc être utilisé pour de nombreux types de données. En particulier, il peut être utilisé pour la simulation numérique d'écoulements de fluides.

Dans le cas particulier de la simulation numérique d'écoulement d'un fluide, le système de processeurs de l'invention permet de traiter les collisions des particules sur un site, ce qui constitue le comportement microscopique du fluide.

Certaines collisions entre particules peuvent être traitées de façon très simples, en particulier, les collisions entre deux particules arrivant face à face sur le site, ou entre trois particules arrivant symétriquement l'une par rapport à l'autre sur le site.

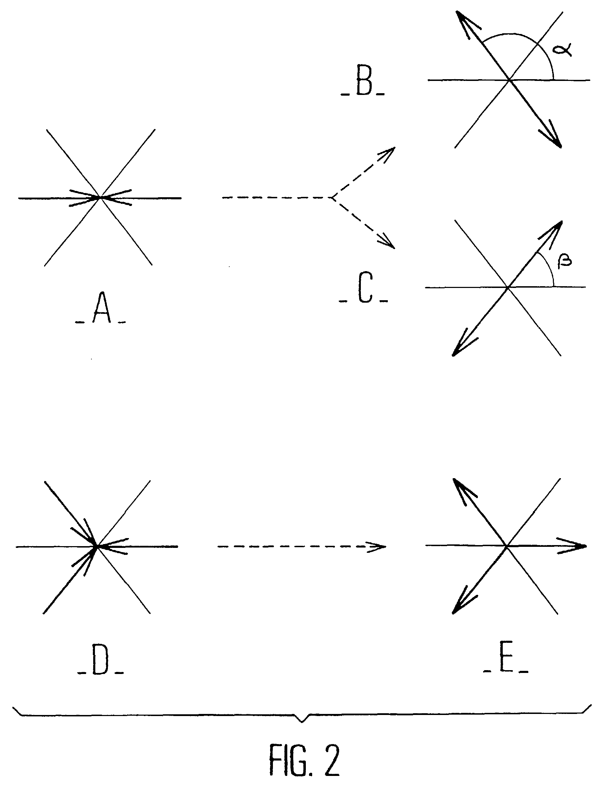

Sur la figure 2, on a représenté justement ces deux exemples de collisions entre particules. La partie A de cette figure 2 représente un exemple de collision entre deux particules arrivant face à face sur le site ; les parties B et C de cette figure représentent les deux collisions résultantes que l'on peut obtenir comme résultat de la collision. Plus précisément, la collision résultante peut consister en ce que les deux particules, après collision, repartent chacune avec un angle α par rapport à leur direction d'arrivée, comme montré en B, ou bien avec un angle β, comme montré en C. Sur l'exemple de la figure 2, α égale environ 120° et β environ 60°.

Sur cette figure 2, on a représenté un second exemple de collision : il s'agit d'une collision D entre trois particules arrivant sur le site selon des directions symétriques les unes par rapport aux autres, c'est-à-dire selon des directions formant un angle de 120° avec les autres directions. Le résultat de cette collision, montré en E, est que chaque particule, après collision, repart selon la même direction que sa direction d'arrivée, mais en sens inverse.

Cependant, comme le sait l'homme de l'art, la plupart des collisions entre particules sont beaucoup plus complexes que celles présentées sur la figure 2. Pour cela, l'invention propose des moyens permettant de décomposer les collisions complexes, c'est-à-dire les collisions multiples, en une pluralité de collisions élémentaires, puis de reconstruire la collision résultante obtenue après que les particules concernées se soient entrechoquées.

Pour cela, chaque processeur élémentaire d'un noeud SIMD, destiné à simuler le comportement de particules sur au moins un site du réseau, est équipé de moyens de décomposition de collisions multiples. Ces moyens de décomposition 12 comportent des moyens de séparation, des moyens d'extraction de maximum/minimum et des moyens de tirage pseudo-aléatoire. Ces moyens seront décrits de façon plus détaillée dans la suite de la description.

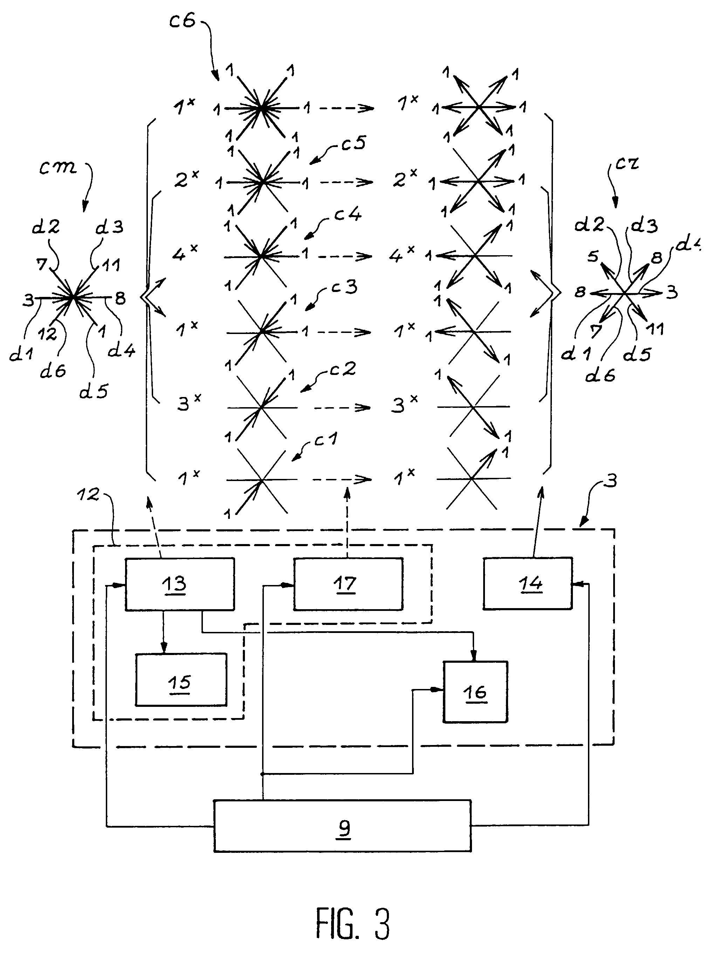

Sur la figure 3, on a représenté un exemple de décomposition d'une collision multiple. Il s'agit d'une collision d'ordre 6 (c'est-à-dire suivant six directions différentes) entre 42 particules. Les six directions d'arrivée des particules sont référencées d1 à d6. Les chiffres notés au bout de chaque flèche représentent le nombre de particules arrivant selon chaque direction. On voit ainsi que trois particules arrivent selon la direction d1, sept particules arrivent selon la direction d2, onze particules selon la direction d3, huit particules selon la direction d4, une particule selon la direction d5 et douze particules selon la direction d6.

Le procédé de décomposition de cette collision multiple consiste à utiliser un modèle distributif à valeurs entières, au sein duquel on décompose, en niveaux successifs, les collisions booléennes multiples, suivant le nombre maximal de particules mises en jeu. Ainsi, dans le cas représenté sur cette figure 3 d'une collision multiple cm à six vecteurs vitesse, on décompose cette collision en, au plus, six niveaux successifs qui correspondent chacun à un multiple entier d'une collision élémentaire.

Dans l'exemple représenté sur la figure 3, le niveau d'ordre 6, C6, est trivial, puisqu'il y a une particule sur chaque direction dl à d6 ; ce niveau d'ordre 6 apparaît une seule fois. La collision élémentaire C5 du niveau d'ordre 5 apparaît deux fois, puisqu'il y a au plus deux particules sur chacune des directions d1, d2, d3, d4 et d6. La collision élémentaire C4, du niveau d'ordre 4 apparaît quatre fois, puisqu'il y a au plus quatre particules sur chacune des directions d2, d3, d4 et d6. La collision élémentaire C3 du niveau d'ordre 3, comporte une seule collision élémentaire sur laquelle une particule apparaît sur chacune des directions d3, d4 et d6. La collision élémentaire C2 du niveau d'ordre 2 apparaît trois fois puisqu'il y a au plus trois particules qui arrivent sur chacune des directions d3 et d6. Et la collision élémentaire C1 du niveau d'ordre 1, c'est-à-dire le dernier niveau d'ordre, est une collision élémentaire simple sur laquelle une seule particule arrive sur la direction d6.

Chacune de ces collisions C1 à C6 est ensuite résolue séparément en suivant le modèle booléen préalablement choisi. On multiplie ensuite la solution booléenne de chaque collision élémentaire par le nombre d'apparitions correspondantes, ou poids. Lorsque l'opération de pondération est terminée, l'ensemble de ces résultats est sommé, de façon à obtenir l'état final de la collision, que l'on appelle collision résultante cr. La collision résultante cr, ainsi obtenue, comporte huit particules qui repartent sur la direction dl, cinq particules sur la direction d2, huit particules sur la direction d3, trois particules sur la direction d4, onze particules sur la direction d5 et sept particules sur la direction d6.

Pour réaliser ce traitement de décomposition/reconstruction de la collision, chaque processeur élémentaire destiné à simuler le comportement d'un site du réseau comporte des moyens de décomposition 12 et des moyens de reconstruction 14.

Les moyens de décomposition comportent donc des moyens de séparation 13 destinés à automatiser la séparation en collisions élémentaires des collisions multiples, des moyens opérateurs d'extraction de maximum/minimum 15 et des moyens de tirage pseudo-aléatoire 17 nécessaires aux phases d'initialisation et de collisions du procédé. Ces différents moyens sont représentés sur la figure 3 en relation avec les différentes étapes de la décomposition de la collision multiple cm, les moments au cours du procédé durant lesquels interviennent ces différents moyens étant symbolisés par des flèches en pointillés.

Les données relatives aux distributions de particules à traiter, mémorisées dans la mémoire de l'UC 9, sont fournies aux moyens de séparation 13 qui assurent la gestion du traitement de ces distributions. Ces moyens de séparation 13, qui seront décrits plus en détail par la suite, sont reliés aux moyens d'extraction de maximum/minium 15 qui aident à la décomposition de la collision multiple cm en collisions élémentaires C1 à C6.

Ces moyens d'extraction de maximum/minimum permettent de s'affranchir, au moins partiellement, du traitement parallèle, c'est-à-dire qu'ils assurent une certaine indépendance du traitement des données de façon à éviter toute perte de temps, dans le cas où l'un des processeurs élémentaires aurait terminé son traitement avant les autres processeurs élémentaires.

Les moyens de tirage pseudo-aléatoire 17 sont utilisés, notamment, lorsque se présentent des collisions multiples, telles que la collision A représentée sur la figure 2, pouvant apporter plusieurs résultats différents. Ces moyens de tirage pseudo-aléatoire 17 sont également utiles lors des phases d'initialisation du traitement pour choisir l'ordre de traitement des distributions en mémoire.

Les moyens de séparation assurent, de plus, l'écriture successive en mémoire des distributions de particules booléennes, de façon à permettre un fonctionnement optimum SIMD pour les zones employant des règles de collisions identiques.

En effet, un processeur traite plusieurs sites séquentiellement au cours d'une même phase de collision. Il se peut alors que sur deux sites traités par deux processeurs différents, la décomposition en distributions booléennes ne prenne pas le même nombre de cycles ; la distribution nulle (c'est-à-dire la dernière distribution lorsque toutes les collisions élémentaires ont été trouvées) peut donc être atteinte en moins d'étapes sur l'un des sites que sur l'autre. Dans ce cas, une perte de temps semble générée par l'attente du processeur le plus long. En fait, les moyens de séparation 13 gèrent la lecture des données provenant des processeurs voisins et le stockage en mémoire contigu des distributions booléennes, de façon à assurer la possibilité d'un chevauchement temporel du traitement de deux sites différents. Le processeur qui a terminé le plus rapidement son traitement de site va alors commencer à traiter un site suivant.

Il est à noter que le traitement est totalement identique, qu'il s'applique à un site ou à un autre site ; seule change l'adresse pointée en mémoire pour la lecture de la distribution d'entrée et l'adresse pointée en mémoire pour l'écriture de la distribution de sortie. Toutefois, le temps de traitement total de deux ensembles égaux de sites par deux processeurs différents se fait en un temps équivalent.

Dans cette application à la simulation numérique d'écoulement de fluides, chaque processeur élémentaire comporte, de plus, des moyens de recomposition 14 pour reconstituer la collision résultante cr, après que chaque collision élémentaire C1 à C6 ait été traitée. Ces moyens consistent en fait à effectuer une sommation de tous les résultats obtenus pour chacune des collisions élémentaires après qu'ils aient été multipliés par le poids qui leur est attribué.

Le procédé de traitement des données relatives aux collisions de particules mis en oeuvre par l'architecture de système en tableau de processeurs décrit précédemment permettent d'obtenir une bonne précision calculatoire et ceci, avec une circuiterie relativement peu coûteuse, puisqu'aucun calcul flottant n'est nécessaire. Par ailleurs, la finesse de la discrétisation des états de présence des particules permet d'obtenir des résultats avec un bruit numérique très faible, donc non gênant. De plus, le fait d'employer des règles de collisions booléennes assure une bonne stabilité calculatoire.

## Revendications

1. Système de processeurs élémentaires en tableau organisés selon une pluralité de noeuds (1a-1d) à fonctionnement SIMD comportant chacun une pluralité de processeurs élémentaires (3) reliés les uns aux autres de façon à former un anneau (2) de processeurs élémentaires, chaque processeur élémentaire étant associé, d'une part, à une mémoire et, d'autre part, à un module d'interconnexion (7), ce dernier comportant une cellule de connexion (7a) connectée aux cellules des processeurs élémentaires voisins pour former un réseau en anneau (4) dans lequel circulent des jetons de priorité, un module (7b) de réception de messages connecté entre la cellule de connexion et le processeur élémentaire et un module (7c) d'émission connecté entre le processeur élémentaire et la cellule de connexion, caractérisé en ce que chaque processeur élémentaire de chaque noeud SIMD est muni d'un module de gestion de sa mémoire locale assurant une indépendance d'adressage de celle-ci vis-à-vis des autres processeurs élémentaires et en ce que chaque noeud SIMD est muni d'une unité de contrôle (9) reliée aux unités de contrôle des noeuds voisins pour former un réseau de contrôle inter-noeuds (6) dans lequel circulent des jetons de priorité.

2. Système de processeurs en tableau selon la revendication 1, caractérisé en ce que chaque noeud à fonctionnement SIMD est muni d'un module de mémoire et d'adressage (11) assurant une indépendance d'adressage du noeud et en ce que chaque module de mémoire et d'adressage d'un noeud est relié au module de mémoire et d'adressage des noeuds voisins de façon à former un réseau de données inter-noeuds (8).

3. Système de processeurs en tableau selon la revendication 1 ou 2 pour la simulation numérique d'écoulement de fluides, caractérisé en ce qu'il comporte des moyens de décomposition (12) pour décomposer une collision de particules de fluide multiple en une pluralité de collisions booléennes élémentaires aptes à être traitées à partir des noeuds SIMD.

4. Système de processeurs en tableau selon la revendication 3, caractérisé en ce que les moyens de décomposition comportent des moyens d'extraction de maximum/minimum (15), des moyens de tirage pseudo-aléatoire (17) ainsi que des moyens de séparation (13) en collisions élémentaires.

5. Système de processeurs en tableau selon la revendication 3 ou 4, caractérisé en ce que chaque processeur élémentaire comporte, en outre, des moyens de recomposition (14) pour reconstruire, à partir des collisions élémentaires traitées, une collision résultante.

## Patentansprüche

1. System von elementaren Arrayprozessoren, angeordnet zu mehreren SIMD-Betriebsknoten (1a-1d), wobei jeder eine Vielzahl Elementarprozessoren (3) umfasst, die derart miteinander verbunden sind, dass sie einen Ring (2) aus Elementarprozessoren bilden und jeder Elementarprozessor einerseits mit einem Speicher verbunden ist und andererseits mit einem Zwischenverbindungsmodul (7), wobei dieser letztere eine Anschlußzelle (7a), verbunden mit den Zellen der benachbarten Elementarprozessoren, um ein ringförmiges Netzwerk (4) zu bilden, in dem Prioritätsunterscheidungsmerkmale zirkulieren, einen Nachrichtenempfangsmodul (7b), eingeschaltet zwischen die Anschlußzelle und den Elementarprozessor, und einen Emissionsmodul (7c) umfasst, eingeschaltet zwischen den Elementarprozessor und die Anschlußzelle,
**dadurch gekennzeichnet**,
dass jeder Elementarprozessor jedes SIMD-Knotens mit einem Verwaltungsmodul seines lokalen Speichers ausgerüstet ist, der dessen Adressier-Unabhängigkeit gegenüber den anderen Elementarprozessoren sichert, und dadurch, dass jeder SIMD-Knoten mit einer Steuereinheit (9) ausgerüstet ist, die mit den Steuereinheiten der benachbarten Knoten verbunden ist, um ein knotenverbindendes Steuernetzwerk (6) zu bilden, in dem Prioritätsunterscheidungsmerkmale zirkulieren.

2. System von Arrayprozessoren nach Anspruch 1, dadurch gekennzeichnet, dass jeder SIMD-Betriebsknoten mit einem Speicher- und Adressiermodul (11) ausgerüstet ist, der eine Adressier-Unabhängigkeit des Knotens sichert, und dadurch, dass jeder Speicher- und Adressiermodul eines Knotens mit dem Speicher- und Adressiermodul der benachbarten Knoten verbunden ist, um ein knotenverbindendes Datennetz (8) zu bilden.

3. System von Arrayprozessoren nach Anspruch 1 oder 2 zur digitalen Simulation der Strömung von Fluiden, dadurch gekennzeichnet, dass es Dekompositionseinrichtungen (12) umfasst, um eine multiple Kollision von Fluidpartikeln aufzulösen in eine Vielzahl logischer Elementarkollisionen, die mittels der SIMD-Knoten verarbeitet werden können.

4. System von Arrayprozessoren nach Anspruch 3, dadurch gekennzeichnet, dass die Dekompositionseinrichtungen Maximum/Minimum-Extraktionseinrichtungen (15), pseudo-zufällige Ziehungseinrichtungen (17) sowie Trennungseinrichtungen (13) in Elementarkollisionen umfassen.

5. System von Arrayprozessoren nach Anspruch 3 oder 4, dadurch gekennzeichnet, dass jeder Elementarprozessor außerdem Rekompositionseinrichtungen (14) umfasst, um aus verarbeiteten Elementarkollisionen eine resultierende Kollision zu rekonstruieren.

## Claims

1. Array-type elementary processor system organized in accordance with a plurality of nodes (1a-1d) with SIMD operation, each having a plurality of elementary processors (3) connected to one another so as to form a ring (2) of elementary processors, each elementary processor being associated on the one hand with a memory and on the other with an interconnection module (7), the latter having a connection cell (7a) connected to the cells of neighbouring elementary processors in order to form a ring network (4), in which circulate priority tokens, a message reception module (7b) connected between the connection cell and the elementary processor and a transmission module (7c) connected between the elementary processor and the connection cell, characterized in that each elementary processor of each SIMD node is provided with a local memory manager ensuring an addressing independence of the latter with respect to the other elementary processors and in that each SIMD node is provided with a control unit (9) connected to the control units of neighbouring nodes in order to form an internode control network (6) in which circulate priority tokens.

2. Array-type processor system according to claim 1, characterized in that each SIMD operation node is provided with a memory and addressing module (11) ensuring an addressing independent of the node and in that each memory and addressing module of a node is connected to the memory and addressing module of neighbouring nodes so as to form an internode data network (8).

3. Array-type processor system according to claim 1 or 2 for the digital simulation of fluid flows, characterized in that it has breaking down means (12) for breaking down a multiple fluid particle collision into a plurality of elementary Boolean collisions which can be processed on the basis of SIMD nodes.

4. Array-type processor system according to claim 3, characterized in that the breaking down means have maximum/minimum extraction means (15), pseudorandom drawing means (17) and elementary collision separation means (13).

5. Array-type processor system according to claim 3 or 4, characterized in that each elementary processor also has reconfiguration means (14) for reconstituting a resultant collision on the basis of processed elementary collisions.
